# DEMANDE DE BREVET EUROPEEN

(11) **EP 0 715 437 A1**
(43) Date de publication de la demande: **05.06.1996**
(21) Numéro de dépôt: 95402660.5
(22) Date de dépôt: 27.11.1995
(51) Int. Cl.: H04L 12/56

(54) **Procédé d'acheminement de cellules dans un réseau ATM**

(30) Priorité: 01.12.1994 FR 9414451
(71) Demandeur: ALCATEL CIT, F-75008 Paris (FR)
(72) Inventeur: Dieudonne, Marc, F-91430 Igny (FR); Frene, Patrick, F-92240 Malakoff (FR); Parmentier, Pierre, F-91400 Saclay (FR)
(74) Mandataire: Pothet, Jean Rémy Emile Ludovic

(57) **Abrégé**

L'invention concerne un procédé d'acheminement de cellules (Ci) dans un réseau de commutation à multiplexage temporel asynchrone interconnectant des commutateurs d'entrée (ME1 à ME4) et des commutateurs de sortie (MS1 à MS4) par l'intermédiaire de commutateurs (M1 à M8), chacun desdits commutateurs d'entrée (ME1 à ME4) pouvant être relié à chacun desdits commutateurs de sortie (MS1 à MS4) par au moins deux chemins, procédé dans lequel la transmission d'une suite de cellules appartenant à une communication donnée entre un desdits commutateurs d'entrée, dit commutateur d'entrée de communication (ME1), et un desdits commutateurs de sortie, dit commutateur de sortie de communication (MS3), comprend les étapes suivantes :
- recensement de l'ensemble des N chemins possibles entre ledit commutateur d'entrée de communication (ME1) et ledit commutateur de sortie de communication (MS3) ;
- établissement de N sous-connexions (SC0 à SC7) correspondant auxdits N chemins possibles ;
- distribution de façon systématiquement égale, dans ledit commutateur d'entrée de communication, des cellules de ladite suite vers lesdites N sous-connexions (SC0 à SC7);
- assemblage, dans ledit commutateur de sortie de communication (MS3), des cellules de ladite suite, de façon à reconstituer ladite suite.

## Description

Le domaine de l'invention est celui des réseaux de commutation à multiplexage temporel asynchrone, tels que, notamment, les réseaux supportant un trafic de cellules ATM (Asynchronous Transfer Mode en anglo-saxon).

Plus précisément, l'invention concerne l'acheminement (ou routage) des cellules dans un tel réseau de commutation à multiplexage temporel asynchrone.

D'une façon générale, un réseau de commutation permet d'interconnecter des commutateurs d'entrée et des commutateurs de sortie par l'intermédiaire de commutateurs. Une suite de cellules appartenant à une communication donnée doit pouvoir être transmise entre l'un quelconque des commutateurs d'entrée et l'un quelconque des commutateurs de sortie.

En général, dans un tel réseau, chacun des commutateurs d'entrée peut être relié à chacun des commutateurs de sortie par au moins deux chemins distincts, chaque chemin correspondant à une suite distincte de commutateurs. Chaque commutateur comprend au moins deux entrées et au moins deux sorties, et est prévu pour transférer sur une de ses sorties une cellule reçue sur une de ses entrées.

On connaît principalement deux modes d'acheminement de cellules dans un réseau de commutation à multiplexage temporel asynchrone.

Un premier mode connu d'acheminement consiste à définir un unique chemin pour la suite des cellules à transmettre appartenant à une communication donnée. Ainsi, après une phase d'établissement de la communication (lors de laquelle est déterminé le chemin), toutes les cellules passent successivement par cet unique chemin.

Ce premier mode connu d'acheminement présente l'avantage de ne nécessiter la recherche (puis l'utilisation) que d'un seul chemin. Toutefois, la recherche de cet unique chemin peut poser des problèmes. En effet, il se peut, lors de la phase d'établissement de la communication, qu'aucun chemin ne puisse être trouvé alors que le réseau de commutation n'est pas saturé. Cette situation, dite de blocage au sens large, correspond donc au cas où, bien qu'un commutateur d'entrée et un commutateur de sortie soient disponibles, le mode d'acheminement choisi est tel qu'il n'existe pas de suite de commutateurs permettant de les interconnecter. Il est à noter qu'une situation de blocage au sens strict correspond au cas où il n'existe pas de chemin possible entre un commutateur d'entrée et un commutateur de sortie, quel que soit le mode d'acheminement choisi.

Afin de sortir d'une telle situation de blocage au sens large, une solution connue consiste à effectuer une expansion spatiale (augmentation du nombre de commutateurs du réseau et/ou une augmentation de débit), ce qui en augmente le coût et la complexité du réseau. Une autre solution connue consiste à effectuer un réarrangement des chemins associés aux communications déjà établies, de façon à rendre disponibles certains commutateurs et permettre l'élaboration d'un chemin. Un tel réarrangement des chemins est une opération complexe, voire même impossible s'il existe plusieurs blocages simultanés.

Un second mode connu d'acheminement consiste à transmettre de façon décorrélée les cellules d'une même suite appartenant à une communication donnée. En d'autres termes, les cellules successives d'une même suite empruntent des chemins différents (on parle également de mode multichemin). L'affectation d'un chemin à une cellule est généralement effectuée selon une distribution aléatoire. Le nombre de chemins différents est quelconque, et généralement limité au nombre minimal nécessaire .

Ainsi, le trafic de cellules est mieux réparti sur le réseau, et le risque de blocage est réduit. Toutefois, ce second mode d'acheminement est complexe du fait de la mise en oeuvre d'une distribution aléatoire des cellules sur les différents chemins. De plus, dans la pratique, il s'introduit des biais, et les cellules ont tendance à emprunter des chemins assez semblables, ce qui entraîne à nouveau des situations de blocage alors que le réseau n'est pas saturé (situations de blocage au sens large). Ces situations de blocage s'expliquent notamment par l'engorgement des mémoires tampons des commutateurs.

Afin d'éviter des engorgements, les réseaux dits multichemin comprennent généralement un étage de brassage des cellules. Malheureusement, un tel étage de brassage ne permet pas de maîtriser les écarts de débits arrivant sur les différents commutateurs d'entrée.

L'invention a notamment pour objectif de pallier ces différents inconvénients de l'état de la technique.

Plus précisément, l'un des objectifs de la présente invention est de fournir un procédé d'acheminement de cellules dans un réseau de commutation à multiplexage temporel asynchrone, qui offre une situation de non blocage au sens large du réseau sans nécessiter d'expansion spatiale (augmentation du nombre de matrices) ni d'expansion de débit du réseau tant que celui-ci n'est pas saturé. En d'autres termes, un objectif de l'invention est d'éviter l'engorgement des mémoires tampons des commutateurs.

Un autre objectif de l'invention est de fournir un tel procédé d'acheminement qui ne nécessite pas la mise en oeuvre complexe d'une distribution aléatoire des cellules sur différents chemins.

Ces différents objectifs, ainsi que d'autres qui apparaîtront par la suite, sont atteints selon l'invention à l'aide d'un procédé d'acheminement de cellules dans un réseau de commutation à multiplexage temporel asynchrone interconnectant des commutateurs d'entrée et des commutateurs de sortie par l'intermédiaire de commutateurs,
chacun desdits commutateurs d'entrée pouvant être relié à chacun desdits commutateurs de sortie par au moins deux chemins, chaque chemin correspondant à une série distincte de commutateurs,
chacun desdits commutateurs comprenant au moins deux entrées et au moins deux sorties et étant prévu pour transférer sur une de ses sorties une cellule reçue sur une de ses entrées,
procédé selon lequel la transmission d'une suite de cellules appartenant à une communication donnée entre un desdits commutateurs d'entrée, dit commutateur d'entrée de communication, et un desdits commutateurs de sortie, dit commutateur de sortie de communication, comprend les étapes suivantes :
- recensement de l'ensemble des N chemins possibles entre ledit commutateur d'entrée de communication et ledit commutateur de sortie de communication ;
- établissement de N sous-connexions correspondant auxdits N chemins possibles ;
- distribution de façon systématiquement égale, dans ledit commutateur d'entrée de communication, des cellules de ladite suite vers lesdites N sous-connexions;
- assemblage, dans ledit commutateur de sortie de communication, des cellules de ladite suite, de façon à reconstituer ladite suite.

Ainsi, le procédé d'acheminement de l'invention consiste, pour chaque suite de cellules à transmettre, à déterminer tous les chemins possibles, à établir une sous-connexion pour chacun des chemins possibles, et à affecter de façon systématique et à tour de rôle une des sous-connexions à chaque cellule. De cette façon, chacune des N sous-connexions issues d'un commutateur d'entrée pour une communication donnée supporte 1/N du trafic arrivant sur ce commutateur d'entrée.

La distribution des cellules vers les sous-connexions étant systématique, elle est très simple à mettre en oeuvre et peu coûteuse (contrairement à une distribution aléatoire comme c'est le cas dans le second mode connu d'acheminement discuté auparavant).

De facon avantageuse, ladite distribution est cyclique.

Il s'agit donc d'une approche nouvelle, déterministe, qui s'oppose à la méthode aléatoire connue.

De plus, la distribution de l'invention assure une répartition équitable du trafic sur le réseau, ce qui limite les risques d'engorgement des mémoires tampons des commutateurs, et permet le non blocage (au sens large) du réseau.

Dans un mode de réalisation avantageux de l'invention, appliqué à un réseau dans lequel chacun desdits commutateurs d'entrée est associé à un commutateur appartenant à un premier étage, chacun desdits commutateurs de sortie est associé à un commutateur appartenant à un dernier étage, les commutateurs desdits premier et dernier étages étant interconnectés par l'intermédiaire d'au moins deux commutateurs formant au moins un étage intermédiaire, le nombre de chemins possibles correspondant au nombre de commutateurs affectés au transfert de cellules et appartenant audit étage intermédiaire ou au produit des nombres de commutateurs affectés au transfert de cellules et appartenant à chacun desdits étages intermédiaires.

Il est à noter que dans le cas le plus simple, l'étage central constitue l'unique étage intermédiaire.

On peut vérifier que le procédé d'acheminement de l'invention permet de diviser par deux, par rapport à la solution sans blocage au sens strict, le nombre de commutateurs par accès.

Avantageusement, chacun desdits commutateurs est dupliqué, de façon à assurer en parallèle une double transmission de chacune desdites cellules. Dans ce cas, à réception, on compare les cellules reçues en parallèle.

Ainsi, le réseau est dupliqué en deux branches (ou plans), chaque branche étant un réseau de commutation à multiplexage temporel asynchrone, ce qui offre une bonne tolérance aux pannes ou erreurs de transmission.

Préférentiellement, on affecte à chacune desdites cellules une donnée de détection et/ou de correction d'erreurs, et, à la réception, on vérifie la qualité des cellules reçues en parallèle, et on retient celles qui présentent la meilleure qualité pour reconstituer ladite suite.

De cette façon, on compare les deux cellules d'une même sous-connexion qui sont passées par deux branches différentes, et on sélectionne celle qui semble le moins entachée d'erreur après une éventuelle correction.

Le réseau est ainsi capable de résister à des erreurs ou défaillances multiples, jusqu'à ce qu'une matrice dans une branche et son double dans l'autre branche soient simultanément en panne.

De plus, la localisation d'une matrice défaillante dans une branche est facilitée par la connaissance du chemin emprunté par une cellule perturbée ayant traversé cette matrice défaillante.

L'invention concerne également un réseau de commutation mettant en oeuvre le procédé décrit ci-dessus. Dans un tel réseau, chacun desdits commutateurs d'entrée comprend avantageusement :
- des moyens d'ouverture de N sous-connexions correspondant aux N chemins possibles entre ledit commutateur d'entrée de communication et ledit commutateur de sortie de communication ;
- des moyens d'affectation d'une desdites sous-connexions à chaque cellule de ladite suite, de façon que les cellules de ladite suite soient distribuées de façon systématiquement égale vers lesdites N sous-connexions.

Avantageusement, chacun desdits commutateurs d'entrée comprend également un compteur modulo N, incrémenté à chaque nouvelle cellule à transmettre de ladite cellule, lesdits moyens d'affectation affectant une desdites sous-connexions à chaque cellule de ladite suite en fonction de la valeur inscrite dans ledit compteur.

L'invention concerne aussi le commutateur d'entrée en tant que tel d'un réseau du type décrit ci-dessus, ainsi que les applications du procédé présenté ci-dessus.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 illustre le procédé selon l'invention d'acheminement de cellules dans un mode de réalisation particulier d'un réseau de commutation ;
- la figure 2 illustre un exemple de distribution systématique et cyclique de cellules vers des sous-connexions du réseau de la figure 1 ;
- la figure 3 illustre le procédé selon l'invention d'acheminement de cellules dans un autre mode de réalisation particulier d'un réseau commutation à trois étages intermédiaires ;
- la figure 4 illustre un exemple de blocage avec des connexions point à point dans un réseau mettant en oeuvre un procédé d'acheminement selon l'état de la technique ;
- la figure 5 illustre un exemple de non blocage avec des connexions point à point dans un réseau du type de celui de la figure 4 mais mettant en oeuvre le procédé d'acheminement selon l'invention ;
- la figure 6 illustre un exemple de non blocage avec des connexions point à multipoint et point à point dans un réseau du type de celui de la figure 4 mais mettant en oeuvre le procédé d'acheminement selon l'invention ;
- la figure 7 présente de façon schématique un mode de réalisation particulier d'un commutateur d'entrée du réseau de la figure 1 ;
- la figure 8 illustre un mode de réalisation particulier du procédé d'acheminement de cellules de l'invention, correspondant au cas où chaque commutateur du réseau est dupliqué ;
- la figure 9 présente un schéma d'un mode de réalisation particulier d'un commutateur d'entrée de réseau selon l'invention, du type recevant des trames de données et injectant dans les étages intermédiaires du réseau des cellules de données ;
- la figure 10 présente un schéma d'un mode de réalisation particulier d'un celluliseur compris dans le commutateur d'entrée de la figure 9 ; et
- la figure 11 présente un schéma d'un mode de réalisation particulier d'un commutateur de sortie de réseau selon l'invention, du type générant des trames de données à partir de cellules de données reçues des étages intermédiaires du réseau.

L'invention concerne donc un procédé d'acheminement de cellules dans un réseau de commutation à multiplexage temporel asynchrone.

En mode de transfert asynchrone (ATM, pour Asynchronous Transfer Mode en anglo-saxon), les cellules, qui constituent les unités de données, possèdent une structure fixe et courte et se suivent sans référence absolue de position. L'identification de la voie de communication est en effet portée par la cellule elle-même, dans un en-tête. Par conséquent, une source peut émettre des cellules à son rythme propre, sans référence directe avec le réseau de communication auquel elle est reliée.

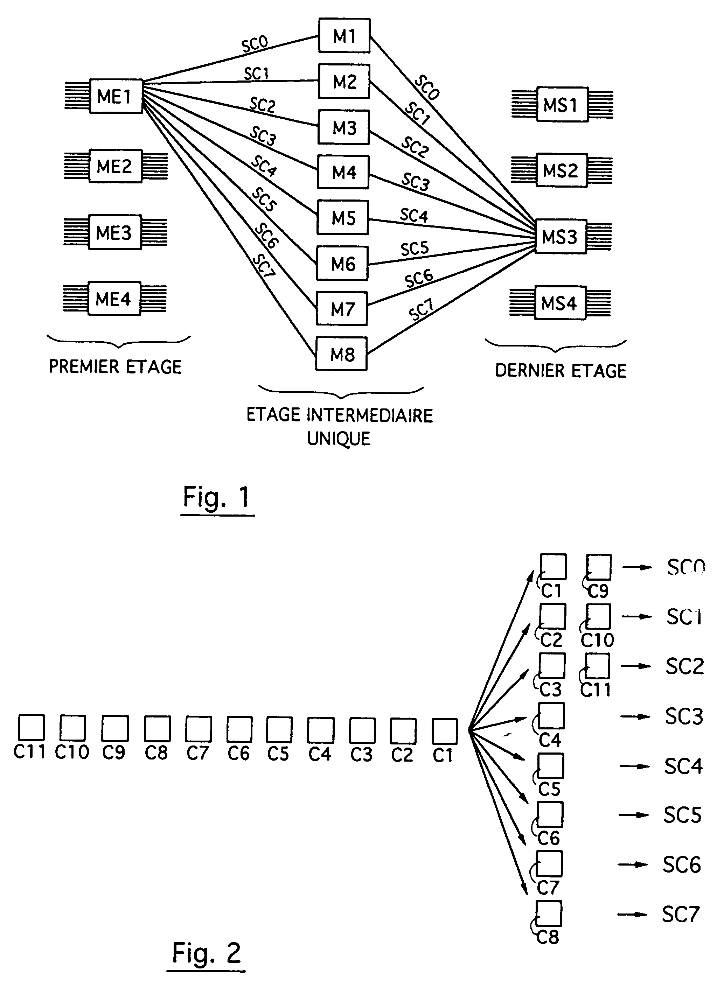

La figure 1 présente de façon schématique un exemple de réseau de commutation dans lequel peut être mis en oeuvre le procédé d'acheminement de cellules de l'invention. Ce réseau interconnecte des ports d'entrée ME1 à ME4 et des ports de sortie MS1 à MS4 par l'intermédiaire de commutateurs intermédiaires M1 à M8. Par la suite, on considère que lesdits ports sont des commutateurs, ou matrices. Chaque commutateur d'entrée associé ME1 à ME4 peut être relié à chacun des commutateurs de sortie associé MS1 à MS4 par au moins deux chemins, chaque chemin correspondant à une suite distincte de commutateurs M1 à M8.

Dans l'exemple de la figure 1, une suite de commutateurs définissant un chemin est en fait constituée d'un seul commutateur M1 à M8.

Chaque commutateur intermédiaire M1 à M8 comprend au moins deux entrées et au moins deux sorties et est prévu pour transférer sur une de ses sorties une cellule reçue sur une de ses entrées.

De façon à simplifier la figure 1, on n'a pas représenté le maillage du réseau, c'est-à-dire l'ensemble des liens permanents existant d'une part entre les sorties des commutateurs d'entrée ME1 et ME4 et les entrées des commutateurs intermédiaires M1 à M8, et d'autre part entre les sorties des commutateurs intermédiaires M1 à M8 et les entrées de commutateurs de sortie MS1 à MS4.

Afin de transmettre une suite de cellules appartenant à une communication donnée entre un des commutateurs d'entrée et un des commutateurs de sortie, le procédé d'acheminement de l'invention comprend les étapes suivantes :
- recensement de l'ensemble des N chemins possibles entre le commutateur d'entrée et le commutateur de sortie ;
- établissement de N sous-connexions correspondant aux N chemins possibles ;
- distribution systématique et cyclique des cellules vers les N sous-connexions, de façon que N cellules consécutives empruntent chacune un chemin distinct.

Une sous-connexion est un conduit virtuel vers lequel sont dirigées, selon une distribution systématique et cyclique, certaines cellules d'une même communication. Une sous-connexion n'est généralement définie que pendant la durée de cette communication.

Sur la figure 1, on considère à titre d'exemple le cas où l'on désire transmettre une suite de cellules entre le commutateur d'entrée ME1 et le commutateur de sortie MS3. L'étape de recensement permet d'établir 8 chemins possibles entre ME1 et MS3, chaque chemin correspondant au passage par un des huit commutateurs intermédiaires M1 à M8. L'étape suivante consiste à établir 8 sous-connexions SC0 à SC7 correspondant aux 8 chemins possibles. Enfin, l'étape de distribution des cellules vers les sous-connexions est illustrée sur la figure 2.

Sur cette figure 2, on a représenté le résultat de la distribution systématique et cyclique d'une suite de 11 cellules successives C1 à C11 vers les 8 sous-connexions SC0 à SC7. Chacune des 8 premières cellules C1 à C8 est dirigée vers une des 8 sous-connexions SC0 à SC7, puis chacune des cellules restantes est dirigée vers une des 3 premières sous-connexions SC0 à SC2.

Ainsi, dans cet exemple, la première sous-connexion SC0 reçoit les cellules C1 et C9 ; la seconde sous-connexion SC1 reçoit les cellules C2 et C10 ; la troisième sous-connexion SC2 reçoit les cellules C3 et C11 ; etc...En d'autres termes, chaque sous-connexion reçoit toutes les cellules qui, modulo N, possèdent un même numéro d'ordre dans la suite, avec N le nombre total de sous-connexions établies.

Dans un mode de réalisation particulier, chaque commutateur d'entrée ME1 à ME4 est associé à un commutateur appartenant à un premier étage, chaque commutateur de sortie est associé à un commutateur appartenant à un dernier étage, et ces commutateurs des premier et dernier étages sont interconnectés par l'intermédiaire d'au moins deux commutateurs formant au moins un étage intermédiaire.

Dans ce cas, le nombre N de chemins possibles entre un commutateur d'entrée et un commutateur de sortie est fonction du nombre de commutateurs appartenant au ou aux étages intermédiaires et qui sont affectés au transfert de cellules.

Plus précisément, s'il existe un seul étage intermédiaire comprenant k commutateurs affectés au transfert de cellules, le nombre N de chemins possibles est égal à k (N = k).

S'il existe n étages intermédiaires comprenant respectivement k₁ à kₙ commutateurs affectés au transfert de cellules, le nombre N de chemins possibles est égal au produit des nombres k₁ à kₙ de commutateurs des étages intermédiaires (N = k₁ x k₂ x...kₙ).

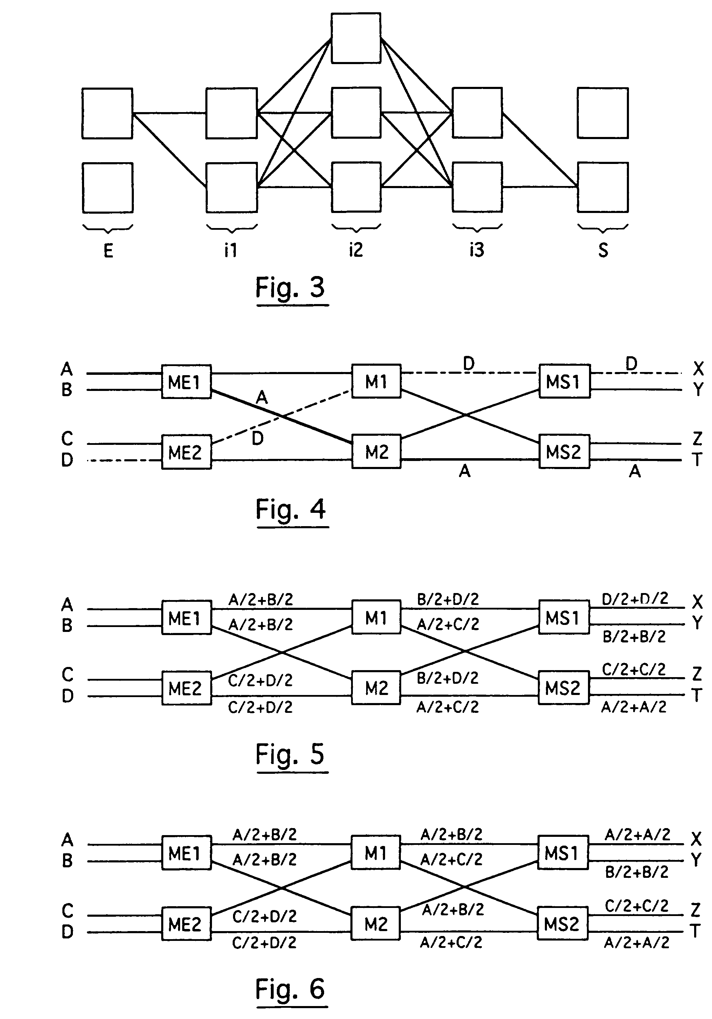

La figure 3 illustre précisément un réseau comprenant un premier étage E, un dernier étage S, et trois étages intermédiaires i1 à i3 constitués respectivement de 2, 3 et 2 commutateurs. Il existe donc N = 2 x 3 x 2 = 12 chemins possibles entre un commutateur d'entrée du premier étage E et un commutateur de sortie du dernier étage S.

Afin de bien faire apparaître les qualités de réduction de blocage qu'offre le procédé d'acheminement de l'invention, on présente maintenant, uniquement à titre d'exemple, un réseau qui présente une situation de blocage avec la mise en oeuvre d'un procédé d'acheminement connu de l'état de la technique (cf figure 4) et au contraire une situation de non blocage avec la mise en oeuvre du procédé d'acheminement de l'invention (cf figures 5 et 6).

Le réseau présenté sur les figures 4 à 6 comprend :
- un premier étage constitué de deux commutateurs d'entrée ME1, ME2 ;
- un étage intermédiaire constitué de deux commutateurs M1, M2 ; et
- un dernier étage constitué de deux commutateurs de sortie MS1, MS2.

Chaque commutateur d'entrée ME1, ME2 possède deux entrées A, B et C, D respectivement et deux sorties. Chacune des deux sorties d'un commutateur d'entrée ME1, ME2 est reliée à une entrée de chacun des deux commutateurs M1, M2. Chacune des deux sorties d'un commutateur M1, M2 est reliée à une entrée de chacun des deux commutateurs de sortie MS1, MS2. Chaque commutateur de sortie MS 1, MS2 possède deux sorties X, Y et Z, T respectivement.

On s'intéresse tout d'abord au cas particulier de connexions point à point, unidirectionnelle en relation avec les figures 4 et 5.

Avec un procédé d'acheminement classique, la transmission d'une suite de cellules appartenant à une communication donnée entre une entrée d'un commutateur d'entrée et une sortie d'un commutateur de sortie comprend les étapes suivantes :
- détermination d'un chemin possible ;
- établissement d'une connexion correspondant à ce chemin possible.

Comme cela est illustré sur la figure 4, il est parfois impossible d'établir 4 connexions point à point simultanées. Notamment, il existe un blocage lorsqu'on désire connecter les entrées A, B, C, D aux sorties T, Y, Z, X respectivement. En effet, dès lors que les entrées A et D sont connectées aux sorties T et X, les entrées B et C ne peuvent plus être connectées qu'aux sorties Z et Y respectivement (et en aucun cas aux sorties Y et Z respectivement).

Avec le procédé d'acheminement de l'invention, comme présenté sur la figure 5, cette situation de blocage est évitée. En effet, pour chaque communication arrivant sur une entrée A, B, C, D de commutateur d'entrée ME1, ME2, on établit autant de sous-connexions qu'il existe de commutateurs M1, M2 dans l'unique étage intermédiaire (soit deux sous-connexions dans cet exemple). Le débit arrivant sur chaque entrée A, B, C, D est réparti sur plusieurs (deux dans cet exemple) sous-connexions, les cellules arrivant sur une entrée étant distribuées de façon systématique et cyclique vers les différentes sous-connexions correspondant aux différents chemins.

La référence indiquée sur les figures 4 à 6 près de chacun des liens entre une sortie de commutateur d'entrée ME1, ME2 et une entrée de commutateur M1, M2, et chacun des liens entre une sortie de commutateur M1 M2 et une entrée de commutateur de sortie MS1, MS2, permet de suivre un chemin à partir d'une entrée A, B, C, D de commutateur d'entrée ME1, ME2.

Ainsi, comme on peut le voir sur la figure 4, entre l'entrée A et la sortie T, il existe un unique chemin noté : ME1 - M2 - MS2. De même, entre l'entrée D et la sortie X, il existe un unique chemin noté : ME2 - M1 - MS1.

Au contraire, comme on peut le voir sur la figure 5, entre l'entrée A et la sortie T, il existe deux chemins distincts : ME1 - M1 - MS2 et ME1 - M2 - MS2. De même, entre l'entrée D et la sortie X, il existe deux chemins distincts : ME2 - M1 - MS1 et ME2 - M2 - MS1.

Or, lorsqu'il existe deux chemins distincts auxquels correspondent deux sous-connexions distinctes, les cellules empruntent alternativement chacune des deux sous-connexions. En d'autres termes, chaque sous-connexion véhicule la moitié du débit initial et le même lien peut donc supporter deux sous-connexions permettant la transmission de cellules appartenant à deux communications distinctes. Ainsi, dans l'exemple présenté sur la figure 5, le lien entre le commutateur d'entrée ME1 et le commutateur M1 supporte une sous-connexion reliant l'entrée A à la sortie T et une sous-connexion reliant l'entrée B à la sortie Y.

Il existe donc :
- entre l'entrée B et la sortie Y, deux chemins distincts : ME1 - M1 - MS1 et ME1 - M2 - MS1 ;
- entre l'entrée C et la sortie Z, deux chemins distincts : ME2 - M1 - MS2 et ME2 - M2 - MS2.

On s'intéresse maintenant au cas particulier de connexions point à multipoint, en relation avec la figure 6.

On peut tout d'abord noter qu'avec un procédé d'acheminement classique, il est parfois impossible d'établir 4 connexions simultanées dont au moins une est point à multipoint. En reprenant le réseau de la figure 4, il est impossible de connecter l'entrée A aux sorties X et T (connexion point à multipoint) et les entrées B et C aux sorties X et Y respectivement (connexions point à point). En effet, dès lors que l'entrée A est connectée aux sorties X et T, les entrées B et C ne peuvent plus être connectées à aucune sortie.

A nouveau, avec le procédé d'acheminement de l'invention, cette situation de blocage est évitée. Pour cela, entre l'entrée A et la sortie X, il existe deux chemins distincts : ME1 - M1 - MS1 et ME1 - M2 - MS1 ; et entre l'entrée A et la sortie T, il existe deux chemins distincts : ME1 - M1 - MS2 et ME1 - M2 - MS2.

Les suites de cellules arrivant sur l'entrée A et correspondant à deux communications distinctes sont attribuées de façon systématique et cyclique sur ces deux couples de chemin. Ceci permet de définir :
- entre l'entrée B et la sortie Y, deux chemins distincts ME1 - M1 - MS1 et ME1 - M2 - MS1;
- entre l'entrée C et la sortie Z, deux chemins distincts ME2 - M1 - MS2 et ME2 - M2 - MS2.

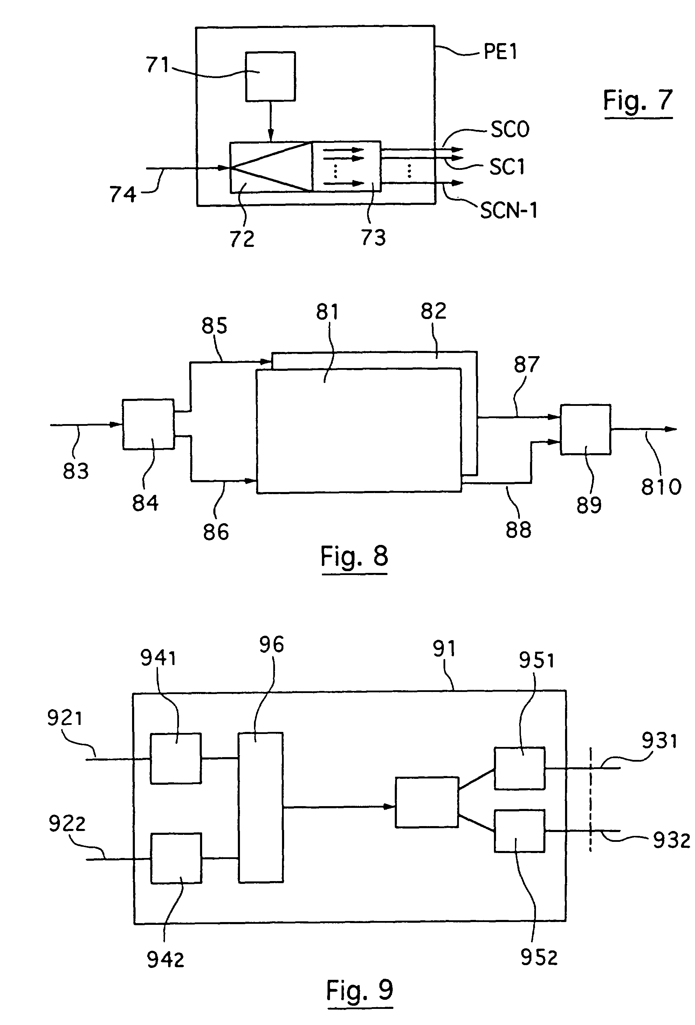

La figure 7 présente de façon schématique un mode de réalisation particulier d'un commutateur d'entrée ME1 à ME4 du réseau de la figure 1. De façon à pouvoir mettre en oeuvre le procédé d'acheminement de l'invention, chaque commutateur d'entrée recevant une suite de cellules 74 à transmettre comprend :
- des moyens 73 d'ouverture de N sous-connexions SC0 à SCN-1 entre ce commutateur d'entrée et un commutateur de sortie, N étant le nombre de chemins possibles entre les commutateur d'entrée et de sortie ;
- un compteur 71 modulo N, incrémenté à chaque nouvelle cellule à transmettre de la suite 74 ; et
- des moyens 72 d'affectation d'une des sous-connexions SC0 à SCN-1 à chaque cellule à transmettre, en fonction de la valeur inscrite dans le compteur 71. De cette façon, N cellules consécutives empruntent chacune un chemin distinct correspondant à une sous-connexion distincte.

Dans un mode de réalisation particulier d'acheminement de l'invention, tel qu'illustré sur la figure 8, chacun des commutateurs est dupliqué et le réseau est constitué de deux branches (ou plans) 81, 82 identiques. Chaque cellule à transmettre 83 est également dupliquée (84), les deux cellules obtenues 85, 86 étant transmises en parallèle dans les deux plans 81, 82. A la réception, on sélectionne (après comparaison) (89) une cellule 810 parmi deux cellules reçues 87, 88.

On peut par exemple affecter à chaque cellule à transmettre 83 une donnée de détection et/ou de correction d'erreur (octet CRC par exemple). Ainsi, lorsque les cellules reçues en parallèle 87, 88 sont différentes, on sélectionne (89) la cellule la plus probable 810 en fonction de la donnée de détection et/ou de correction d'erreurs.

La suite de la description présente, en relation avec les figures 9 à 11, un mode de réalisation très particulier de l'invention dans lequel les commutateurs d'entrée de réseau réalisent une fonction de cellulisation et les commutateurs de sortie de réseau une décellulisation. En effet, dans cet exemple très particulier, les commutateurs d'entrée du réseau reçoivent des trames d'octets et les commutateurs de sortie du réseau génèrent également des trames d'octets. En d'autres termes, les commutateurs d'entrée permettent de passer d'un mode de transmission synchrone à un mode de transmission asynchrone, les commutateurs de sortie permettant le passage inverse.

Il est clair que l'invention n'est pas limitée à ce mode de réalisation très particulier mais concerne plus généralement tous les cas où des cellules (mode asynchrone) sont acheminées entre des commutateurs d'entrée et des commutateurs de sortie, quelle que soit le mode de transmission (synchrone ou asynchrone) des données en amont des commutateurs d'entré et en aval des commutateurs de sortie.

La figure 9 présente un schéma d'un mode de réalisation particulier d'un commutateur d'entrée 91 de réseau selon l'invention, du type recevant des trames de données sur des liens d'entrée 92₁ à 92₃ et générant des cellules de données sur des liens de sortie 93₁ à 93₂.

Les liens d'entrée 92₁ , 92₂ sont par exemple des liens synchrones à 155,52 Mbit/s véhiculent des trames du type STM1. Les liens de sortie 93₁, 93₂ sont par exemple des liens asynchrone à 622Mbit/s correspondant chacun à un accès à une des deux branches d'un réseau ATM, comme cela est expliqué par la suite.

A chaque lien d'entrée 92₁, 92₂ et à chaque lien de sortie 93₁, 93₂ correspond un équipement d'extrémité de ligne 94₁, 94₂, 95₁, 95₂.

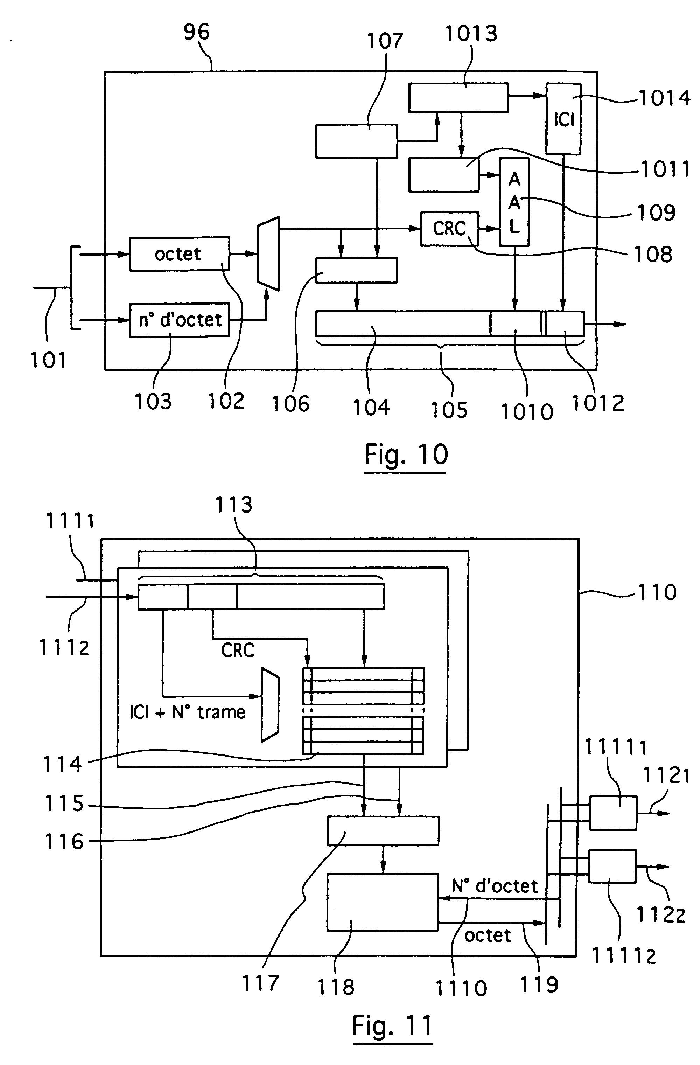

Les trames STM1 reçues sur les liens d'entrée 94_{,} 92₂ sont transformées en cellules de données dans un celluliseur 96 (présenté par la suite en relation avec la figure 10). Chaque cellule émise par le celluliseur 96 est dupliquée dans un module de duplication 97 (composant QRP fonctionnant en mode IEM par exemple) et les deux cellules obtenues sont chacune dirigées vers un des deux liens de sortie 93₁, 93₂.

Le procédé d'acheminement mis en oeuvre dans ce mode de réalisation particulier de l'invention est donc du type présenté auparavant en relation avec la figure 8. pour chaque suite de cellules générée par le celluliseur, deux suites de cellules identiques vont être transmises dans deux plans de réseau parallèles qui constituent chacun un réseau de commutation à multiplexage temporel asynchrone mettant en oeuvre le procédé d'acheminement de l'invention avec notamment l'établissement de N sous-connexions correspondant aux N chemins possibles, et la distribution systématique et cyclique des cellules vers les N sous-connexions).

La figure 10 présente un schéma d'un mode de réalisation particulier du celluliseur 96 compris dans le commutateur d'entrée 91 de la figure 9.

Dans le commutateur d'entrée 91, un celluliseur 96 est associé à chaque lien d'entrée 92₁, 92_{2.} Ce celluliseur reçoit, après synchronisation des trames entrantes, une succession d'octets 101.

Deux registres 102, 103 reçoivent successivement chaque octet et son numéro correspondant dans la trame.

Chaque octet est stocké temporairement dans un registre tampon 106 de champ de donnée, en fonction de la valeur inscrite dans un compteur 107 modulo C1, avec C1 (= 46 dans cet exemple) le nombre d'octets dans le champ de données 104, le compteur 107 étant incrémenté (grâce à une horloge locale) à chaque nouvelle écriture d'un octet.

Lorsque ce registre tampon 106 est plein, il est recopié dans le champ de données 104 d'une cellule 105.

Les C1 octets destinés à une même cellule permettent également de calculer une donnée CRC de détection et/ou de correction d'erreurs. Cette donnée CRC est stockée dans un registre tampon 108, puis inscrite, avec le numéro de trame, dans un registre tampon 109 AAL (couche d'adaptation ATM).

Le contenu de ce registre tampon 109 étant recopié dans un champ AAL 1010 de chaque cellule 105. Le numéro de trame étant fourni par la valeur inscrite dans un compteur 1011 modulo C2, avec C2 = 17 le nombre total de numéros de trames possibles, le compteur 1011 étant incrémenté grâce à un signal de synchronisation trame indiquant chaque nouvelle trame reçue.

Enfin, un module 1014 fournit pour le champ d'entête 1012 de chaque cellule 105, un identificateur de connexion interne ICI = x ; d permettant d'identifier :
- localement, sur l'accès au réseau de commutation, le groupe x de sous-connexions sur lequel va être dirigée la cellule 105 ;
- la sous-connexion que va emprunter la cellule 105 parmi celles du groupe x.

Dans chaque groupe x, il existe d sous-connexions différentes sous lesquelles sont distribuées de façon systématique et cyclique les cellules successives d'une même suite (par exemple associée à une communication donnée).

La valeur d est fournie par la valeur inscrite dans un compteur 1013 modulo C3, avec C3 = N le nombre de chemins possibles entre le commutateur d'entrée et le commutateur de sortie à interconnecter.

Chaque cellule émise sur un des liens de sortie 93₁, 93₂ du commutateur d'entrée 91 comprend donc :
- une information d'interface précisant le plan de réseau par lequel elle passe;
- un identificateur de connexion interne ICI = x ; d ;
- un numéro de séquence (comprenant un numéro de trame et un CRC) nécessaire à la réception pour le dégigage et le reséquencement ;
- un champ de données utiles.

La figure 11 présente un schéma d'un mode de réalisation d'un commutateur de sortie 110 de réseau selon l'invention, du type générant des trames de données sur des liens de sortie 112₁, 112₂ à partir de suites de cellules de données reçues des liens d'entrée 111₁, 111₂. Le commutateur de sortie 112₁, 112₂ est par exemple un lien synchrone à 155,52 Mbit/s véhiculant des trames du type STM1.

Chaque cellule 113 reçue sur un lien d'entrée 111₁ est stockée temporairement dans un registre tampon. En fonction de l'ICI et du numéro de trame, le champ de données utiles et le CRC sont inscrits dans la mémoire de dégigage 114 associée à ce lien d'entrée 111₁.

De même, en parallèle, le champ de données utiles et le CRC de la cellule correspondante reçue sur l'autre lien d'entrée 111₂ sont stockés dans la mémoire de dégigage associée à cet autre lien d'entrée 111₂.

Le dégigage est réalisé, dans chaque mémoire, par réservation d'une place par cellule attendue. De cette façon, le reséquencement est automatiquement assuré, et la détection de cellules manquantes est immédiate.

Afin de former des trames sur les liens de sorties 112₁, 112₂, pour chaque adresse cellule (ICI et numéro de trame) successive, on lit chacune des deux mémoires de dégigage. Les informations de cellules lues 115, 116 sont comparées (117) (notamment grâce au CRC) et un champ de données utiles (parmi les deux lus) est sélectionné (118). Les octets 119 de ce champ sélectionné sont inscrits, en fonction de leur numéro, 1110, dans des registres de trames 1111₁, 1111₂ qui sont ensuite lus de façon à émettre les trames sur les liens de sortie 112₁, 112₂.

L'invention peut notamment être mise en oeuvre dans :
- les répartiteurs numériques de niveau 4 (140 Mbits/s, 155 Mbits/s) ;
- le réseau ATM de l'OCB283 RCH (répartiteur numérique brassant :
   - le niveau 4 (140 Mbits/s, 155 Mbits/s) ;
   - le niveau 3 (34 Mbits/s) ;
   - le niveau 1 (2 Mbits/s).
- les réseaux utilisés comme étage central de commutation spatial d'un brasseur 4x3x1.

## Revendications

1. Procédé d'acheminement de cellules (Ci) dans un réseau de commutation à multiplexage temporel asynchrone interconnectant des commutateurs d'entrée (ME1 à ME4) et des commutateurs de sortie (MS1 à MS4) par l'intermédiaire de commutateurs (M1 à M8),
chacun desdits commutateurs d'entrée (ME1 à ME4) pouvant être relié à chacun desdits commutateurs de sortie par au moins deux chemins, chaque chemin correspondant à une suite distincte de commutateurs,
chacun desdits commutateurs (MEi, MSi, Mi) comprenant au moins deux entrées et au moins deux sorties et étant prévu pour transférer sur une de ses sorties une cellule reçue sur une de ses entrées,
procédé caractérisé en ce que la transmission d'une suite de cellules appartenant à une communication donnée entre un desdits commutateurs d'entrée, dit commutateur d'entrée de communication (ME1), et un desdits commutateurs de sortie, dit commutateur de sortie de communication (MS3), comprend les étapes suivantes :
- recensement de l'ensemble des N chemins possibles entre ledit commutateur d'entrée de communication (ME1) et ledit commutateur de sortie de communication (MS3) ;
- établissement de N sous-connexions (SC0 à SC7) correspondant auxdits N chemins possibles ;
- distribution de façon systématiquement égale, dans ledit commutateur d'entrée de communication (ME1), des cellules (Ci) de ladite suite vers lesdites N sous-connexions (SC0 à SC7) ;
- assemblage, dans ledit commutateur de sortie de communication (MS3), des cellules (Ci) de ladite suite, de façon à reconstituer ladite suite.

2. Procédé selon la revendication 1, caractérisé en ce que ladite distribution de façon systématiquement égale est cyclique.

3. Procédé selon l'une quelconque des revendications 1 et 2, caractérisé en ce que ledit réseau comprend deux sous-réseaux en parallèle (81, 82), commandés de façon à assurer en parallèle une double transmission de chacune des cellules de ladite suite, et en ce que, à la réception, on vérifie (89) la qualité des cellules reçues en parallèle, et on retient celles (810) qui présentent la meilleure qualité pour reconstituer ladite suite.

4. Procédé selon la revendication 3, caractérisé en ce qu'on affecte à chacune desdites cellules une donnée de détection et/ou de correction d'erreurs, et en ce que, lorsque lesdites cellules reçues en parallèle sont différentes, on sélectionne (89) la cellule la plus probable en fonction de ladite donnée de détection et/ou de correction d'erreurs.

5. Réseau de commutation à multiplexage temporel asynchrone pour l'acheminement de cellules (Ci), ledit réseau interconnectant des commutateurs d'entrée (ME1 à ME4) et des commutateurs (MS1 à MS4) de sortie par l'intermédiaire de commutateurs (M1 à M8),
chacun desdits commutateurs d'entrée (ME1 à ME4) pouvant être relié à chacun desdits commutateurs de sortie (MS1 à MS4) par au moins deux chemins, chaque chemin correspondant à une série distincte de commutateurs (M1 à M8),
chacun desdits commutateurs (MEi, MSi, Mi) comprenant au moins deux entrées et au moins deux sorties et étant prévu pour transférer sur une de ses sorties une cellule reçue sur une de ses entrées,
caractérisé en ce que chacun desdits commutateurs d'entrée, dit commutateur d'entrée de communication (ME1) lorsqu'il est utilisé pour la transmission d'une suite de cellules appartenant à une communication donnée vers un desdits commutateurs de sortie, dit commutateur de sortie de communication (MS3), comprend :
- des moyens d'ouverture de N sous-connexions (SC0 à SC7) correspondant aux N chemins possibles entre ledit commutateur d'entrée de communication (ME1) et ledit commutateur de sortie de communication (MS3) ;
- des moyens d'affectation d'une desdites sous-connexions à chaque cellule (Ci) de ladite suite, de façon que les cellules de ladite suite soient distribuées de façon systématiquement égale vers lesdites N sous-connexions (SC0 à SC7).

6. Réseau selon la revendication 5, caractérisé en ce que chacun desdits commutateurs d'entrée comprend également un compteur modulo N (1013), incrémenté à chaque nouvelle cellule à transmettre de ladite suite,
lesdits moyens d'affectation affectant une desdites sous-connexions à chaque cellule de ladite suite en fonction de la valeur inscrite dans ledit compteur.

7. Commutateur d'entrée d'un réseau selon l'une quelconque des revendications 5 et 6, caractérisé en ce qu'il comprend :
- des moyens d'ouverture de N sous-connexions (SC0 à SC7) correspondant aux N chemins possibles entre ledit commutateur d'entrée de communication (ME1) et ledit commutateur de sortie de communication (MS3) ;
- des moyens d'affectation d'une desdites sous-connexions à chaque cellule (Ci) de ladite suite, de façon que les cellules de ladite suite soient distribuées de façon systématiquement égale vers lesdites N sous-connexions (SC0 à SC7).

8. Application du procédé selon l'une quelconque des revendications 1 à 4 à un réseau dans lequel chacun desdits commutateurs d'entrée (ME1 à ME4) appartient à un premier étage, chacun desdits commutateurs de sortie (MS1 à MS4) appartient à un dernier étage, les commutateurs desdits premier et dernier étages étant interconnectés par l'intermédiaire d'au moins deux commutateurs (M1 à M8) formant au moins un étage intermédiaire,
caractérisée en ce que le nombre de chemins possibles correspond au nombre de commutateurs affectés au transfert de cellules et appartenant audit étage intermédiaire ou au produit des nombres de commutateurs affectés au transfert de cellules et appartenant à chacun desdits étages intermédiaires.
